# EUROPÄISCHE PATENTANMELDUNG

(11) **EP 4 521 005 A1**
(43) Veröffentlichungstag der Anmeldung: **12.03.2025**
(21) Anmeldenummer: 24199111.6
(22) Anmeldetag: 09.09.2024
(51) Int. Cl.: F16K 11/085, E03B 7/04, E03B 7/09

(54) **TRINK- UND BRAUCHWASSERSYSTEM UND ABSPERRVENTIL DAFÜR**

(30) Priorität: 11.09.2023 DE 202023105233 U
(71) Anmelder: Gebr. Kemper GmbH + Co. KG, 57462 Olpe (DE)
(72) Erfinder: Spöler, Thomas, 51427 Bergisch Gladbach (DE); Obst, Andreas, 57482 Wenden (DE)
(74) Vertreter: Grünecker Patent- und Rechtsanwälte PartG mbB

(57) **Zusammenfassung**

Die vorliegende Erfindung betrifft ein Trink- oder Brauchwassersystem mit einem Übergabepunkt (22) von dem öffentlichen Wasserversorgungsnetz, einem Strang (2, 4), von dem zumindest eine mit zumindest einem Verbraucher (12) versehene Ringleitung (10; 38, 40) abgeht, wobei die Ringleitung (10) über eine Auslassöffnung (14) von dem Strang (2, 4) abgeht und über eine Einlassöffnung (16) in den Strang (2, 4) zurückgeführt ist, wobei der Strang (2, 4) und die Ringleitung (10) parallel geführt sind und in dem Strang (2, 4) zwischen der Auslassöffnung (14) und der Einlassöffnung (16) ein Strömungswiderstandselement (36) angeordnet ist, oder wobei die Ringleitung (38, 40) über die Einlassöffnung (16) in eine Zirkulationsleitung (6) zurückgeführt ist. Die vorliegende Erfindung will das Absperren der Ringleitung für Funktionsprüfungen, Reinigungsmaßnahmen oder zu Wartungszwecken vereinfachten du schlägt hierzu vor, die Auslassöffnung (14) und die Einlassöffnung (16) und die Ringleitung (10) an ein ein Stellglied (44) aufweisendes Absperrventil (18, 20) anzuschließen, das zwischen der Auslassöffnung (14) bzw. der Einlassöffnung (16) und der mit dem zumindest einen Verbraucher (12) versehenen Ringleitung (10) angeordnet ist. Das erfindungsgemäße Absperrventil hat ein Gehäuse (42), das einen ersten strangseitigen Anschluss (58), der mit der Auslassöffnung (14) kommuniziert, einen zweiten strangseitigen Anschluss (60), der mit der Einlassöffnung (16) kommuniziert, einen ersten ringleitungsseitigen Anschluss (62) und einen zweiten ringleitungsseitigen Anschluss (64) hat, und ein Stellglied (44), das so in dem Gehäuse (42) angeordnet und ausgebildet ist, dass abhängig von der Stellung des Stellgliedes (44) in dem Gehäuse (42) ein erster und ein zweiter Strömungsweg (70, 76) zwischen den strangseitigen und den ringleitungsseitigen Anschüssen (58, 62; 60, 64) gebildet ist, bzw. Bypasswege (76; 78) durch das Gehäuse (42) gebildet sind, so dass zwei Anschlüsse (58, 60; 62, 64) miteinander verbunden sind, wohingegen andere Anschlüsse (62, 64; 58, 60) abgesperrt sind, bzw. einer der Strömungswege (70, 76) durchgängig und der andere der Strömungswege (76, 70) abgesperrt ist.

## Beschreibung

Die vorliegende Erfindung betrifft ein Trink- oder Brauchwassersystem mit einer Übergabestelle aus einem öffentlichen Trinkwasser-Versorgungsnetz und mit wenigstens einem Stockwerks- bzw. Steigrohrstrang sowie in der Regel mehreren in Erstreckungsrichtung des Stranges hintereinander angeordneten und jeweils zu wenigstens einer Entnahmestelle führenden Leitungen, die von dem Strang abgehen.

Ein gattungsgemäßes Trink- und Brauchwassersystem ist beispielsweise aus EP 1 845 702 A1 bekannt.

Dieses vorbekannte System lässt sich - wie auch das System nach der vorliegenden Erfindung - von der Überlegung leiten, dass verschiedene Verbraucher über einen Strang versorgt werden können. Bei dem Strang handelt es sich um einen Stockwerks- oder Steigrohrstrang. Der Steigrohrstrang verläuft üblicherweise mehrere Stockwerke durchsetzend in der Regel streng geradlinig. Entsprechendes gilt für den Stockwerksstrang. Dieser verläuft horizontal in einem Stockwerk und versorgt mehrere hintereinanderliegende Nasszellen oder Wohnungen. Im Hinblick auf eine möglichst verlustarme Bereitstellung von Trink- und Brauchwasser an einem der Verbraucher wird üblicherweise auf unnötige Umlenkungen von dem Übergabepunkt bis zu dem Verbraucher verzichtet. So wird jeder der Stränge für sich möglichst geradlinig verlegt. Dies ermöglicht eine Versorgung der jeweiligen Verbraucher mit einem guten Leitungsdruck. So können an dem jeweiligen Verbraucher relativ hohe Volumenströme erreicht werden. Im Hinblick auf die Trinkwasserhygiene ist es zu bevorzugen, zumindest einen Verbraucher, bevorzugt mehrere Verbraucher beispielsweise einer Nasszelle, über eine Ringleitung anzuschließen. Diese Ringleitung geht über eine Auslassöffnung von dem Strang ab und wird über eine Einlassöffnung dem Strang zurückgeführt. Zwischen der Einlass- und der Auslassöffnung ist in dem Strang ein Strömungswiderstandselement vorgesehen. Dieses Strömungswiderstandselement bewirkt eine gewisse Durchströmung der Ringleitung beim Durchströmen des Stranges im Falle eines Bezuges von Wasser an einem Verbraucher, der der entsprechenden Ringleitung stromabwärtig vorgesehen ist. Der Strömungswiderstand kann an der Einlassöffnung einen Venturi-Effekt erzeugen. Das Strömungswiderstandselement kann auch bloß den Strömungswiderstand in dem Maße im Strang erhöhen, dass ein gewisser Teilstrom die wesentlich längere und damit mit einem höheren Strömungswiderstand als der Abschnitt des Stranges zwischen der Auslassöffnung und der Einlassöffnung versehenen Ringleitung durchströmt. So wird die Ringleitung bei Bezug von Wasser an einem stromabwärtig vorgesehenen Verbraucher parallel zu dem Strang durchströmt und damit durchspült.

Das Strömungswiderstandselement kann ein statisch ausgebildetes Strömungswiderstandselement sein, wie dies beispielsweise aus EP 1 845 702 A1 bekannt ist. Auch kann das Strömungswiderstandselement in einer Ringleitungsspülarmatur verwirklicht sein, die die Einlassöffnung und die Auslassöffnung sowie zwei sich üblicherweise einander gegenüberliegende Öffnungen für die Strangströmung ausbildet. Das Strömungswiderstandselement kann auch ein sich an die Druckverhältnisse dynamisch anpassendes Strömungswiderstandselement sein, wie dies in EP 2 167 740 A1 beschrieben ist. Bei diesem Stand der Technik befindet sich unmittelbar benachbart zu der Auslassöffnung ein Vollstrom-Absperrventil. Ein weiteres Vollstrom-Absperrventil ist unmittelbar vor der Auslassöffnung vorgesehen. Durch die beiden Absperrventile kann die Ringleitung für den Wartungsfall oder auch im Rahmen der Installation abgesperrt und von dem allgemeinen Verteilungsnetz des Trink- und Brauchwassersystems getrennt werden. Über die entsprechenden Vollstrom-Absperrventile kann auch eine Funktionsprüfung der Ringleitung erfolgen.

Als Ringleitungen im Sinne der vorliegenden Erfindung kann auch eine ringförmige Verrohrung verstanden werden, bei welcher von einer Auslassöffnung eines Stranges zur Warmwasserversorgung eine Warmwasserversorgungsleitung zu mindestens einem, in der Regel zu verschiedenen Verbrauchern abgeht, welche über eine Einlassöffnung zurückgeführt und über diese an eine andere Leitung angeschlossen ist, die im Folgenden als Zirkulationsleitung bezeichnet wird. Solche Verrohrung ist üblicherweise zur Versorgung einer Nasszelle mit einer innerhalb der Nasszelle verlegten Warmwasserversorgungsleitung und einer innerhalb der Nasszelle verlegten Warmwasserzirkulationsleitung verwirklicht, in die die Warmwasserversorgungsleitung üblicherweise innerhalb der Nasszelle übergeht und die einen kleineren Nenndurchmesser als die Warmwasserversorgungsleitung hat.

Der Montageaufwand für diese zwei Absperrventile ist erheblich. Zudem ist die Nachvollziehbarkeit der jeweiligen Ventilstellung für den Benutzer oftmals nicht gegeben. Eine fehlerhafte Benutzung der Absperrventile kann zu einer unzureichenden Durchströmung bzw. zu Stagnation insbesondere innerhalb der Ringleitung führen. Eines der Absperrventile kann geschlossen, das andere geöffnet sein, ohne dass dies notwendigerweise zu der Wahrnehmung einer Störung führen muss, da der in der Ringleitung vorgesehene Verbraucher in diesem Fall das geöffnete Absperrventil durchsetzend zugeleitet wird. Dabei spielt es keine Rolle, ob es sich bei der die Versorgung des Verbrauchers in der Ringleitung ermöglichenden Öffnung um die Einlassöffnung oder die Auslassöffnung handelt. Die beim Bezug von Wasser durch den Verbraucher wirkende Druckdifferenz führt immer zu einer Strömung von Wasser in Richtung auf den Verbraucher, sodass über diesen Wasser entnommen werden kann.

Jenseits dessen müssen die Ventile zugänglich sein, sodass der Anzahl der Ventile entsprechende Durchlässe bzw. Revisionsklappen zur Bedienung der jeweiligen Ventile vorgesehen sein müssen. Bei der Installation der entsprechenden Ventile in Wohnungen wird der ästhetische Eindruck zumindest desjenigen Bereiches beeinträchtigt, von dem aus die Absperrventile zugänglich sein sollen.

Die vorliegende Erfindung will ein Trink- und Brauchwassersystem der eingangs genannten Art angeben, das Fehlbenutzungen möglichst ausschließen und die Nachvollziehbarkeit des Betriebs und vor allem der Installation erhöhen soll. Auch soll das Absperren der Ringleitung für Funktionsprüfungen, Reinigungsmaßnahmen oder zu Wartungszwecken vereinfacht sein.

Im Hinblick darauf wird mit der vorliegenden Erfindung vorgeschlagen, die Auslassöffnung und die Einlassöffnung sowie die Ringleitung an ein einziges Absperrventil anzuschließen. Dieses eine Absperrventil hat ein Stellglied, um Ventilstellungen einzustellen. Das Absperrventil befindet sich zwischen der Auslassöffnung und der Einlassöffnung und der den zumindest einen Verbraucher aufweisenden Ringleitung. Zwischen dem Absperrventil und dem Strang ist dabei üblicherweise kein Verbraucher vorgesehen. Das Absperrventil schließt möglichst unmittelbar an den Strang und die dort vorgesehenen Aus- und Einlassöffnungen an. Das Absperrventil befindet sich bevorzugt an einer Stelle entsprechend den Vollstrom-Absperrventilen gemäß EP 2 167 740 A1. Das Absperrventil kann beispielsweise in baulicher Einheit mit einer Ringleitungsspülarmatur verwirklicht und mit dieser vertrieben sein. Die von einer solchen Ringleitungsspülarmatur gebildeten Aus- und Einlassöffnungen sind hinsichtlich ihrer relativen Abstände an strangseitige Anschlüsse angepasst, die an einem Gehäuse des Absperrventils angeordnet sind, welches das Stellglied aufnimmt und beweglich lagert. So kann zwischen diesen strangseitigen Anschlüssen und der Auslassöffnung bzw. der Einlassöffnung eine unmittelbare Verbindung erfolgen, beispielsweise durch Fittinge oder einander zugeordnete Schraubverbindungen. Das Stellglied ist dabei so eingestellt, dass zumindest die aus dem Stand der Technik bekannten Stellungen möglich sind, bei denen die Ringleitung über die Auslassöffnung und die Einlassöffnung bei einem möglichst geringen Strömungswiderstand innerhalb des Absperrventils durchströmt werden kann oder aber die Ringleitung gegenüber dem Strang abgesperrt ist. Diese beiden Ventilstellungen können üblicherweise durch Handhabung des einzigen Stellgliedes des Absperrventils verwirklicht werden. Dadurch ist die Handhabung vereinfacht. Darüber hinaus muss lediglich ein Zugang für das Absperrventil von außen geschaffen werden, was den ästhetischen Anforderungen der den Zugang zu dem Absperrventil ermöglichenden Räumlichkeit verbessert. Da lediglich ein einziges Absperrventil von dem Benutzer betätigt bzw. gestellt werden muss, können durch geeignete Kennzeichnungen an dem Gehäuse und/oder dem Stellglied der Benutzer der jeweilige Betriebszustand des Absperrventils vermittelt werden. Fehlbenutzungen sind damit weitestgehend ausgeschlossen. Der jeweilige Betriebszustand des Absperrventils erschließt sich dem Benutzer unmittelbar.

"Abgesperrt" bedeutet dabei, dass ein abgesperrter Anschluss innerhalb des Absperrventils mit keinem anderen Anschluss des Absperrventils strömungstechnisch verbunden ist. Die Ventilstellungen, in der Regel sämtliche Ventilstellungen werden üblicherweise durch Stellung des einzigen Stellgliedes des Absperrventils und/oder durch Handhabung des einzigen Stellgliedes verwirklicht.

Das Gehäuse des Absperrventils hat üblicherweise einen ersten strangseitigen Anschluss, der mit der Auslassöffnung kommuniziert. Das Gehäuse hat ferner einen zweiten strangseitigen Anschluss, der mit der Einlassöffnung kommuniziert. Auch hat das Gehäuse einen ersten ringleitungsseitigen Anschluss und einen zweiten ringleitungsseitigen Anschluss. Von diesen beiden ringleitungsseitigen Anschlüssen geht die Ringleitung ab. Mit anderen Worten erfolgt der Anschluss der Ringleitung an das Gehäuse über die beiden ringleitungsseitigen Anschlüsse. Das Stellglied ist dabei bevorzugt so in dem Gehäuse angeordnet und ausgebildet, dass eine Betriebsstellung des Stellgliedes und eine Bypassstellung des Stellgliedes eingestellt werden können. In der Betriebsstellung des Stellgliedes wird in dem Gehäuse ein erster Strömungsweg gebildet, der den ersten strangseitigen Anschluss mit dem ersten ringseitigen Anschluss verbindet. Auch wird in dieser Betriebsstellung ein zweiter Strömungsweg in dem Gehäuse ausgebildet, der den zweiten strangseitigen Anschluss mit dem zweiten ringleitungsseitigen Anschluss verbindet. In der Betriebsstellung wird damit eine Durchströmung der Ringleitung bei einer in dem Strang wirkenden Parallelströmung erzeugt, wie sie im Stand der Technik bei geöffneten Vollstrom-Absperrventilen gegeben ist.

Mit Blick auf die möglichst verlustfreie Durchströmung des Absperrventils ist dabei vorzugsweise der erste Strömungsweg mit dem Nenndurchmesser des ersten strangseitigen und des ersten ringleitungsseitigen Anschlusses ausgebildet. Der zweite Strömungsweg ist bevorzugt mit dem Nenndurchmesser des zweiten strangseitigen und des zweiten ringleitungsseitigen Anschlusses ausgebildet. In der Betriebsstellung wird dementsprechend vorzugsweise ein Vollstrom durch das Absperrventil ermöglicht.

Das Stellglied ist ferner bevorzugt so in dem Gehäuse angeordnet und ausgebildet, dass in einer Bypassstellung des Stellgliedes in dem Gehäuse ein erster Bypassweg gebildet ist, der den ersten strangseitigen Anschluss mit dem zweiten strangseitigen Anschluss verbindet. Der erste und zweite ringleitungsseitige Anschluss ist dabei abgesperrt. Die Bypassstellung ermöglicht dementsprechend eine Bypassströmung von der Auslassöffnung in die Einlassöffnung unter Umgehung der Ringleitung, die damit beispielsweise zu Wartungszwecken zugänglich ist, ohne dass das gesamte Trink- und Brauchwassersystem drucklos gestellt werden muss. Bei üblichen Strömungsgeschwindigkeiten im Strang ist der Durchfluss durch den Bypassweg dabei auf unter 3 Liter/Minute beschränkt. Die Bypassstellung erlaubt auch einen Bezug von Wasser an einem der Ringleitung im Strang nachgeordneten Verbraucher.

Neben der Betriebsstellung und der Bypassstellung ermöglicht das Stellglied aufgrund seiner Ausgestaltung und Anordnung in dem Gehäuse bevorzugt weitere Betriebsstellungen, nämlich eine erste einseitige Betriebsstellung, in der der erste Strömungsweg durchgängig ist und der zweite Strömungsweg abgesperrt ist und eine zweite einseitige Betriebsstellung, in der der zweite Strömungsweg durchgängig und der erste Strömungsweg abgesperrt ist. Jede dieser einseitigen Betriebsstellungen ermöglicht die Durchführung von Funktionsüberprüfungen und Reinigungsmaßnahmen innerhalb der Ringleitung bzw. eines spezifischen Abschnitts der Ringleitung, da die zufließende Strömung nur aus einer Richtung aus dem Strang in die Ringleitung erfolgen kann.

Bevorzugt kann das Stellglied derart in dem Gehäuse angeordnet und ausgebildet sein, dass in einer Ringleitungs-Bypassstellung des Stellgliedes ein zweiter Bypassweg in dem Gehäuse gebildet ist, der den ersten ringleitungsseitigen Anschluss mit dem zweiten ringleitungsseitigen Anschluss verbindet. In dieser Ringleitungs-Bypassstellung ist der erste und der zweite strangseitige Anschluss abgesperrt. Eine solche Ringleitungs-Bypassstellung kann zum Zwecke der Funktionsprüfung der Ringleitung als solches oder auch für Reinigungsmaßnahmen innerhalb der Ringleitung sinnvoll sein.

Mit der vorliegenden Erfindung werden verschiedene Ausgestaltungen ermöglicht, die jeweils für sich einen verminderten Bauraum in einer Dimension ermöglichen. Beide Varianten gehen davon aus, dass das Stellglied zylinderförmig ausgebildet und verschwenkbar in dem Gehäuse aufgenommen ist. Bei der ersten Variante sind die Anschlüsse und/oder Ausformungen des Stellgliedes, die abhängig von der Stellung des Stellgliedes verschiedene Durchgänge zwischen den Anschlüssen ausbilden, im Wesentlichen in einer Ebene angeordnet, die sich quer zu einer Schwenkachse des Stellgliedes erstreckt. In dieser Ebene sind die entsprechenden Anschlüsse auf dem Umfang des Gehäuses verteilt vorgesehen. Das Gehäuse hat dementsprechend eine verhältnismäßig große Grundfläche bei einer geringen Tiefe. Als Tiefe wird hier die Erstreckung entlang der Schwenkachse verstanden. Eine solche Bauform kann für eine relativ dünne Wand sinnvoll sein, die das Absperrventil in sich aufnehmen soll.

Bei anderen Anforderungen und insbesondere wenn ein geringer Einbauraum in der Ebene der entsprechenden Wand vorhanden ist, ist ein anderer Aufbau zu bevorzugen, bei der das Stellglied zwei hintereinander in einer sich entlang der Schwenkachse des Stellgliedes erstreckenden Richtung angeordnete Durchgangsbohrungen aufweist, die den ersten Strömungsweg bzw. den zweiten Strömungsweg ausbilden. Alternativ oder ergänzend kann bei dieser Variante der erste strangseitige Anschluss in einer sich entlang der Schwenkachse des Stellgliedes erstreckenden Richtung hinter bzw. vor den zweiten strangseitigen Anschluss vorgesehen sein. Eine entsprechende Anordnung wird vorzugsweise für die beiden ringleitungsseitigen Anschlüsse vorgegeben. Die Anschlüsse zu der Ringleitung bzw. die Anschlüsse zu dem Strang und/oder die zur Ausbildung des ersten bzw. des zweiten Strömungsweges vorgesehenen Durchgangsbohrungen liegen dementsprechend bei einer Draufsicht auf die Wand entsprechend einer Draufsicht auf die Schwenkachse des Stellgliedes hintereinander. Üblicherweise liegen die entsprechenden Anschlüsse bzw. die Durchgangsbohrungen auch in Richtung dieser Schwenkachse streng hintereinander. Ein strangseitiger Anschluss liegt dementsprechend entlang der Schwenkachse unmittelbar vor bzw. hinter dem zweiten strangseitigen Anschluss. Entsprechendes gilt für die ringleitungsseitigen Anschlüsse. Die strangseitigen Anschlüsse liegen dabei bevorzugt den ringleitungsseitigen Anschlüssen diametral gegenüber, sodass die Durchgangsbohrungen als geradlinige Bohrungen innerhalb des Stellgliedes ausgespart werden können, wodurch der Strömungswiderstand innerhalb des Absperrventils vermindert wird.

Gemäß einer bevorzugten Weiterbildung der vorliegenden Erfindung weist das Stellglied ein Dehnstoffelement auf, das zumindest einem der Strömungswege zugeordnet ist. Durch dieses Dehnstoffelement ist der Strömungsdurchgang durch den entsprechenden Strömungsweg temperaturabhängig drosselbar. Das Dehnstoffelement ist der Temperatur des strömenden Trink- oder Brauchwassers ausgesetzt. Es kann damit temperaturabhängig die Durchströmung des Absperrventils begrenzen.

Damit eignet sich das Absperrventil auch für den hydraulischen Abgleich in einem Warm- oder Kaltwassersystem. Bei mehreren Absperrventilen, die jeweils einer Ringleitung zugeordnet sind, erfolgt über das Dehnstoffelement eine temperaturabhängige Drosselung zu der jeweiligen Ringleitung abhängig von der dort vorherrschenden Temperatur. Das Dehnstoffelement kann dabei in einem Warmwassersystem dafür sorgen, dass bei hinreichend warmem Wasser in der Ringleitung die Durchströmung der entsprechenden Ringleitung verstärkt gedrosselt oder diese Ringleitung gar über das Dehnstoffelement abgesperrt wird. In einem Kaltwassersystem kann das Dehnstoffelement eine angemessen kalte Temperatur einstellen und bei Vorhandensein einer angemessen kalten Wassertemperatur in der Ringleitung die Strömung in dieser vermehrt drosseln oder gar zum Erliegen bringen, während bei zu hohen Kaltwassertemperaturen das Dehnstoffelement stärker aufmacht und so für einen besseren Austausch des warmen mutmaßlich abgestandenen Kaltwassers sorgt, sodass dieses aus der Ringleitung über die Ringleitungsströmung ausgefördert werden kann.

So wird gemäß einer bevorzugten Weiterbildung der vorliegenden Erfindung auch ein Absperrventil unter Schutz gestellt, dass sich für ein Trink- und Brauchwassersystem der eingangs genannten Art eignet. Dieses Absperrventil kann nahe eines Stranges angeordnet sein, um eine Ringleitung, die von dem Strang abgeht und zu dem Strang zurückgeführt wird, anzuschließen und über die verschiedenen Stellungen Strömungsdurchgänge zu erlauben.

Weitere Vorteile und Einzelheiten der vorliegenden Erfindung ergeben sich aus der nachfolgenden Beschreibung eines Ausführungsbeispiels in Verbindung mit der Zeichnung. In dieser zeigen:
- Figur 1: eine schematische Ansicht eines ersten Ausführungsbeispiels eines Trink- und Brauchwassersystems;
- Figur 2: eine schematische Darstellung eines zweiten Ausführungsbeispiels eines Trink- und Brauchwassersystems, wobei lediglich die Kaltwasserleitungen dargestellt sind;
- Figur 3: einen Ausschnitt eines Ausführungsbeispiels eines Trink- und/oder Brauchwassersystems, wobei lediglich ein Teil der Warmwasserversorgung verdeutlich ist;
- Figur 4: eine Explosionsdarstellung eines ersten Ausführungsbeispiels eines Absperrventils;
- Figuren 5a-5d: Schnittdarstellungen zu verschiedenen Stellungen des Stellgliedes des Ausführungsbeispiels gemäß Figur 4;
- Figuren 6a-6d: eine schematische perspektivische Seitenansicht eines zweiten Ausführungsbeispiels eines Absperrventils in verschiedenen Stellungen des Stellgliedes;
- Figuren 7a-7d: Schnittansichten zu den Stellungen 6a bis 6d und
- Figur 8: eine Variante des in den Figuren 7a-d gezeigten Absperrventiles in einer Stellungen gemäß Figur 7a mit einem Dehnstoffelement.

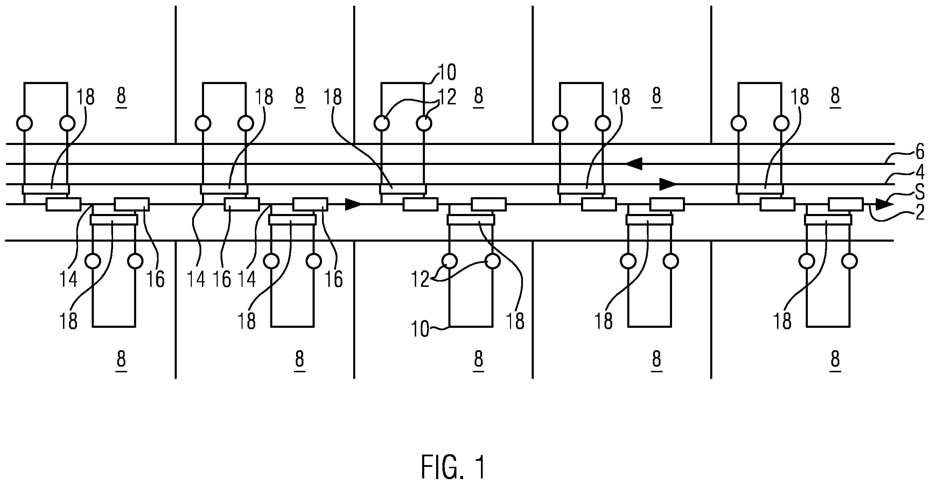

Das in Fig. 1 gezeigte Ausführungsbeispiel verdeutlicht eine Trink- und Brauchwasserinstallation am Beispiel eines Hotels oder eines Krankenhauses. Auf einem schematisch gezeigten Stockwerk läuft ein Kaltwasserstrang 2 und parallel hierzu ist ein Warmwasserstrang 4 und eine Warmwasserzirkulationsleitung 6 vorgesehen. Jede Nasszelle 8 weist eine Ringleitung 10 für Kaltwasser auf, die an den Kaltwasserstrang 2 jeweils angeschlossen ist. Jede Ringleitung 10 weist mehrere Verbraucher 12 auf, deren Anschlüsse an die unter Putz verlegte Ausführungsbeispiele nach den Figuren 1 bis 3 mit einem Punkt schematisch gekennzeichnet sind. Bei den Verbrauchern 12 kann es sich um eine Toilette, eine Dusche, eine Badewanne oder ein Handwaschbecken handeln. Diese Verbraucher 12 sind in der Ringleitung 10 in Reihe geschaltet.

Die Ringleitung 10 geht über eine Auslassöffnung 14 von dem Kaltwasserstrang 2 ab und mündet über eine Einlassöffnung 16 in diesen Strang 2 ein. Die Auslassöffnung 14 jeder einzelnen Ringleitung ist in Strömungsrichtung (Pfeil S im Kaltwasserstrang 2 eingezeichnet) der Einlassöffnung 16 vorgelagert. Vom Flur oder der jeweiligen Nasszelle 8 zugänglich sind in zu Beginn der jeweiligen Ringleitung 10 und nahe dem Strang 2 jeweils Absperrventile 18 vorgesehen, durch welche die daran angeschlossene Ringleitung 10 von dem Kaltwasserstrang 2 abgesperrt werden kann, um beispielsweise Montagearbeiten an der entsprechenden Ringleitung 10 durchzuführen. An gleicher Stelle befinden sich auch die Absperrventile 20 für den Anschluss der Nasszelle 8 an den Warmwasserstrang 4 und die Warmwasserzirkulationsleitung 6.

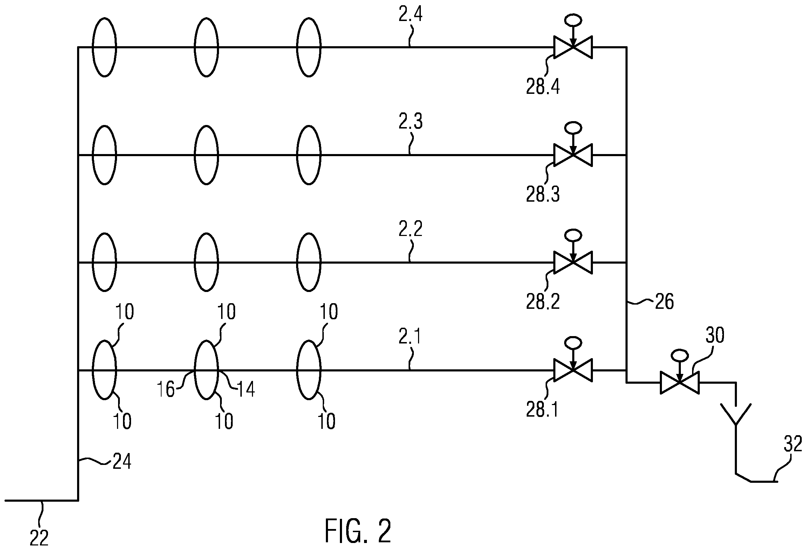

In Fig. 2 sind Kaltwasserleitungen eines Trinkwassersystems in einem mehrstöckigen Haus, beispielsweise einem Krankenhaus gezeigt. In jedem einzelnen Stockwerk können Wasserleitungen gemäß den Darstellungen in Fig. 1 verlegt sein. Das Kaltwasserleitungssystem hat eine Übergabestelle 22 aus dem öffentlichen Trinkwasserversorgungsnetz, eine sich in vertikaler Richtung erstreckende Steigleitung 24, von welcher in jedem Stockwerk ein horizontal verlaufender Stockwerksstrang 2 abgeht, eine in der Vertikalen verlaufende Verbindungsleitung 26, die unter Zwischenschaltung eines steuerbaren Ventils 28 jeweils an die einzelnen Stockwerkstränge 2 angeschlossen ist und über ein ebenfalls steuerbares Spülventil 30 zu einer Abgabestelle 32 für verbrauchtes Wasser an das öffentliche Abwasserentsorgungsnetz führt. Die einzelnen Kaltwasserstockwerksstränge 2 verlaufen in horizontaler Richtung und übereinander. In jedem Stockwerk ist ein Strang 2 vorgesehen. Bei dem in Fig. 2 gezeigten zweiten Ausführungsbeispiel weist jeder Strang 2 sechs Ringleitungen 10 auf, die über Auslassöffnungen 14 und Einlassöffnungen 16 von den einzelnen Strängen 2 abgehen bzw. in diese zurückgeführt werden.

Die Auslassöffnung und die Einlassöffnung zu einer einzelnen Ringleitung 10 kann über eine Ringleitungsspülarmatur 34, die in ihrem Inneren ein Strömungswiderstandselement 36 aufweist. Diese Ringleitungsspülarmatur 34 kann gemäß EP 1 845 207 A1 oder EP 2 167 740 A1 ausgebildet sein.

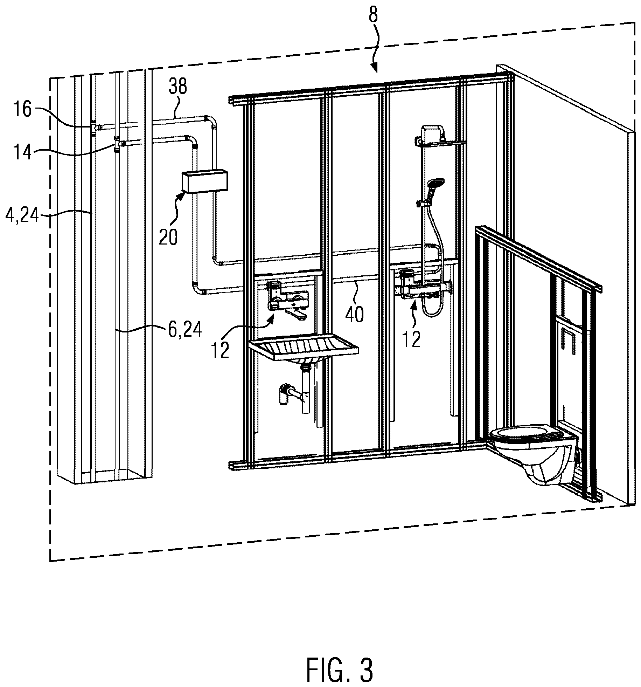

Die Figur 3 zeigt schematisch den Anschluss einer Nasszelle 8 an die Warmwasserversorgung und Zirkulation. Von dem Warmwasserstrang 4 geht eine Warmwasserversorgungsleitung 38 ab, die bis zu dem letzten Verbraucher 12, vorliegend einer Dusche, geleitet wird. Hinter dieser Dusche geht die Warmwasserversorgungsleitung 38 in eine mit kleinerem Nenndurchmesser als Warmwasserversorgungsleitung 38 versehene Warmwasserzirkulationsleitung 40 über, die in der Warmwasserzirkulationsleitung 6 mündet. Der Warmwasserstrang 4 und die Warmwasserzirkulationsleitung 6 sind parallel zueinander als vertikale Steigleitungen 24 verlegt. Der Warmwasserstrang 4 geht vorliegend von einem im Keller angeordneten Warmwassererzeuger ab. Die Warmwasserzirkulationsleitung 6 führt zu diesem Warmwassererzeuger. Die Warmwasserversorgungsleitung 38 und die Warmwasserzirkulationsleitung 40 bilden eine Ringleitung 10 im Sinne der vorliegenden Erfindung aus. Diese Leitungen 38, 40 sind jeweils an das Absperrventil 20 angeschlossen.

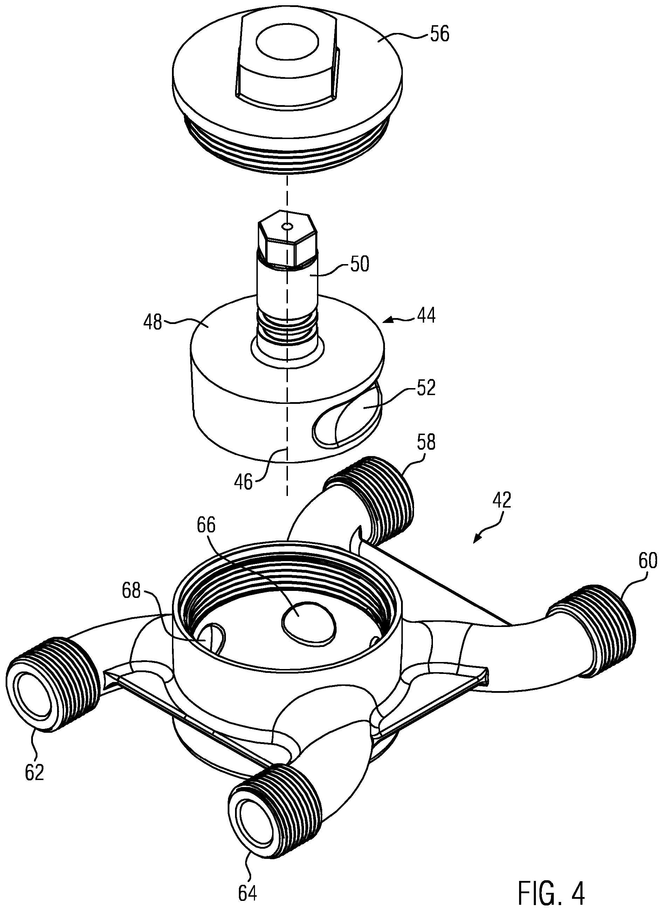

Die in den Figuren 1 und 3 mit Bezugszeichen 18 bzw. 20 gekennzeichneten und dort lediglich schematisch dargestellten Absperrventile können wie nachstehend unter Bezugnahme auf die aus den Figuren 4 ff erläutert ausgebildet sein.

Figur 4 zeigt ein Gehäuse 42 des Absperrventils 18/20, in dem ein Stellglied 44 um eine Schwenkachse 46 verschwenkbar gelagert ist. Das Stellglied 44 hat einen im Wesentlichen zylindrischen Ventilkörper 48 und einen davon mittig abragenden Betätigungszapfen 50.

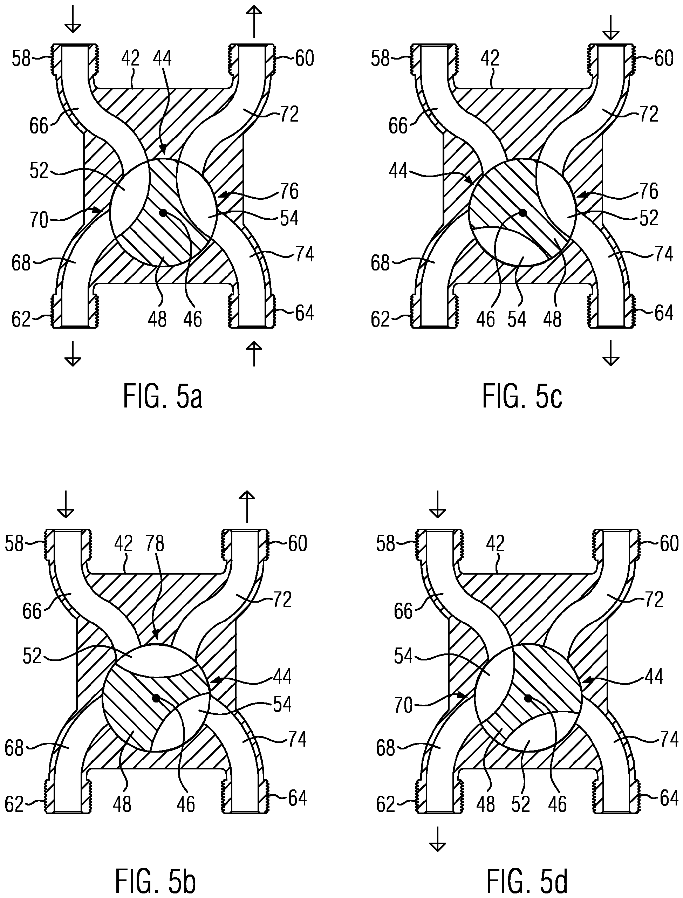

Wie insbesondere die Figuren 5a bis d verdeutlichen, hat der Ventilkörper 48 an seiner Außenumfangsfläche zwei Ausformungen in Form von konkaven Mulden, von denen in Figur 4 lediglich die nachfolgend als erste konkave Mulde 52 bezeichnete Ausformung zu erkennen ist. Die andere, zweite konkave Mulde 54 ist in den Figuren 5a bis d erkennbar.

Das Stellglied 44 ist in dem Gehäuse 42 abgedeckt über einen Gehäusedeckel 56 verschwenkbar und abgedichtet aufgenommen, sodass sich innerhalb des Gehäuses 42 unterschiedliche Strömungsdurchgänge ergeben können, auf die nachstehend eingegangen wird.

In den nachstehenden Figuren kennzeichnet Bezugszeichen 58 einen ersten strangseitigen Anschluss, der mit der Auslassöffnung 14 zu verbinden ist. Bezugszeichen 60 kennzeichnet einen zweiten strangseitigen Anschluss, der mit der Einlassöffnung 16 verbindbar ist.

Über diese Anschlüsse 58 bis 64 können abhängig von der Stellung des Stellgliedes 44 unterschiedliche Durchgänge durch das Gehäuse 42 des Absperrventils 18 bzw. 20 geschaffen werden.

Die Figur 5a verdeutlicht die Betriebsstellung. In dieser verbindet die erste konkave Mulde 52 in dem Gehäuse 42 ausgebildete Strömungsabschnitte 66, 68, um einen ersten Strömungsweg 70 auszubilden, der den ersten strangseitigen Anschluss 58 mit dem ersten ringleitungsseitigen Abschnitt 62 verbindet. Die zweite konkave Mulde 54 verbindet entsprechende Strömungsabschnitte 72, 74 zur Ausformung eines zweiten Strömungsweges 76. In dieser Betriebsstellung kann die Ringleitung 10 wie im Stand der Technik mit geöffnetem Vollstrom-Absperrventilen durchströmt werden. Die Strömungsabschnitte 68, 70, 72, 74 sowie die beiden konkaven Mulden 52, 54 sind so ausgebildet, dass der erste Strömungsweg 70 bzw. der zweite Strömungsweg 76 mit dem Nenndurchmesser der jeweiligen Anschlüsse 58, 60, 62, 64 ausgebildet ist. Vorliegend sind sämtliche Anschlüsse 58, 60, 62, 64 mit gleichem Nenndurchmesser verwirklicht. Im Falle eines Absperrventils 20 für die Warmwasserzirkulation können die Anschlüsse 60, 64 und der diese verbindende zweite Strömungskanal 76 auch mit geringerem Nenndurchmesser verwirklicht sein, der dem Nenndurchmesser der Warmwasserzirkulationsleitung 40 entspricht.

Die Figur 5b verdeutlicht eine Bypassstellung des Stellgliedes 44. In dieser Bypassstellung ist das Stellglied 44 gegenüber der Betriebsstellung gemäß Figur 5a um etwa 80° im Uhrzeigersinn verschwenkt. Die erste konkave Mulde 52 verbindet den Strömungsabschnitt 66 mit dem Strömungsabschnitt 72, wodurch ein erster Bypassweg gebildet ist, der den ersten strangseitigen Anschluss 58 mit dem zweiten strangseitigen Anschluss 60 verbindet. Die beiden ringleitungsseitigen Anschlüsse 62, 64 sind durch das Stellglied 44 abgesperrt.

In Figur 5c ist das Stellglied 44 um weitere etwa 90° gegenüber der ersten Bypassstellung gemäß Figur 5b im Uhrzeigersinn verschwenkt. In der weiteren Betriebsstellung nach Figur 5d ist das Stellglied 44 um weitere circa 60° im Uhrzeigersinn verschwenkt. In der ersten einseitigen Betriebsstellung des Stellgliedes 44 gemäß Figur 5d ergibt sich ein durchgängiger erster Strömungsweg 70, wohingegen der zweite Strömungsweg 76 abgesperrt ist. Danach ist der zweite strangseitige Anschluss 60 und der zweite ringleitungsseitige Anschluss 64 abgebsperrt. Die in Figur 5c gezeigte Betriebsstellung ist die zweite einseitige Betriebsstellung, in welcher der zweite Strömungsweg 76 durchgängig ist und der erste Strömungsweg 70 abgesperrt ist.

Bei dem Ausführungsbeispiel nach den Figuren 5a bis d befinden sich sämtliche Anschlüsse 58, 60, 62, 64 und die Ausformungen 52, 54 des Stellgliedes 44 auf einer Ebene, die sich rechtwinklig zu der Schwenkachse 46 erstreckt.

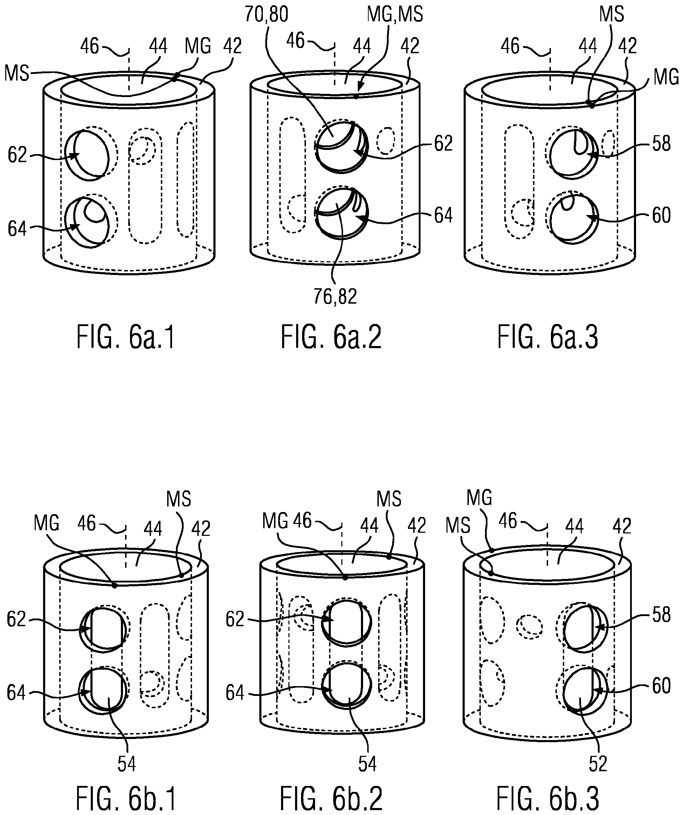

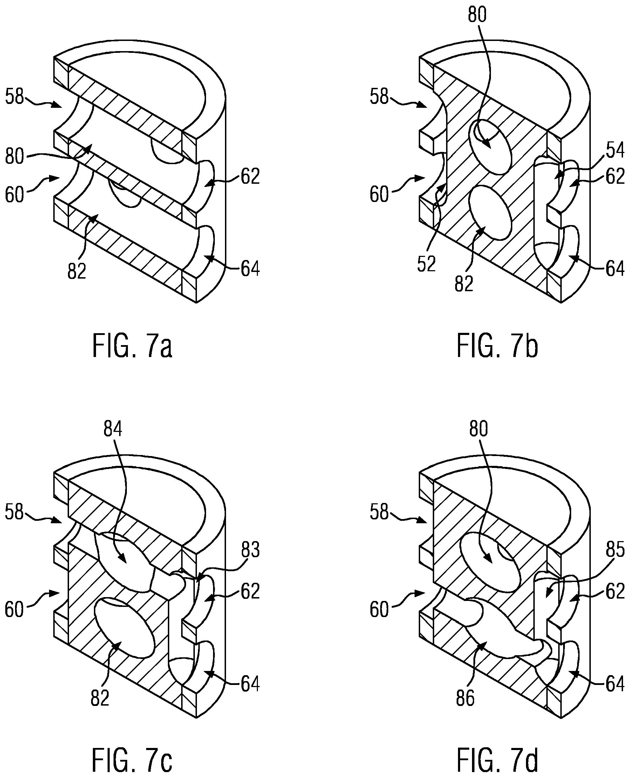

Bei dem Ausführungsbeispiel nach den Figuren 6a.1 bis 6d.3 sind gleiche Bauteile mit gleichen Bezugszeichen gegenüber dem vorherigen Beispiel gekennzeichnet. In einem schematisch auch am Außenumfang zylindrisch wiedergegebenen Gehäuse 42 ist ein zylindrisches Stellglied 44 verschwenkbar um eine Schwenkachse 46 gelagert. An dem Außenumfang des Gehäuses 42 sind der erste strangseitige Anschluss 58 und der zweite strangseitige Anschluss 60 in Erstreckungsrichtung der Schwenkachse 46 übereinander vorgesehen (vgl. Figur 6a.3). In gleicher Weise sind der erste ringleitungsseitige Anschluss 62 und der zweite ringleitungsseitige Anschluss 64 übereinander vorgesehen (vgl. Figur 6a.1). Die Figur 6a.2 lässt Durchgangsbohrungen 80, 82 erkennen, die ebenfalls in Erstreckungsrichtung der Schwenkachse 46 übereinander vorgesehen sind. In der Betriebsstellung nach Figur 6a.1 bis 6a.3 und Figur 7a fluchtet die Durchgangsbohrung 80 mit dem ersten strangseitigen Anschluss 58 und dem ersten ringleitungsseitigen Anschluss 62. Die zweite Durchgangsbohrung 82 fluchtet mit dem zweiten strangseitigen Anschluss 60 und mit dem zweiten ringleitungsseitigen Anschluss 64. So sind durchgehende erste und zweite Strömungskanäle 70, 76 geschaffen. Die Durchmesser der Anschlüsse 58, 60, 62, 64 und der Durchgangsbohrungen 80, 82 sind vorliegend identisch.

Die Figuren 6b.1 bis 6d.3 lassen die anderen Betriebsstellungen des Stellgliedes 44 erkennen. Der Ventilkörper hat hierzu neben Durchgangsbohrungen noch Mulden, die teilweise in den Figuren dargestellt sind.

Figur 6b.1 bis 6b.3 und Figur 7b zeigt die Bypassstellung des Stellgliedes 44, bei welcher der erste strangseitige Anschluss 58 mit dem zweiten strangseitigen Anschluss 60 über eine erste konkave Mulde 52, die an dem Außenumfang des Stellgliedes 44 ausgespart ist, kurzgeschlossen ist. Figur 6b.1 zeigt einen Kurzschluss des ersten ringleitungsseitigen Anschlusses 62 mit dem zweiten ringleitungsseitigen Anschluss 64 über eine zweite konkave Mulde 54. So zeigt Figur 6b die Bypassstellung des Stellgliedes 44 sowie die Ringleitungs-Bypassstellung des Stellgliedes 44, die vorliegend mit einer einzigen Position des Stellgliedes 44 verwirklicht ist.

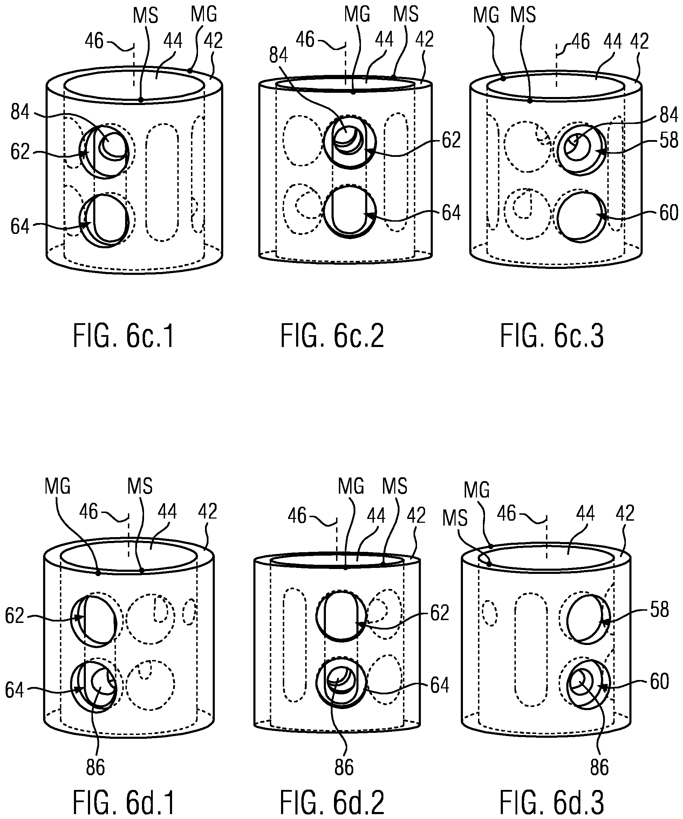

Die Figuren 6c.1 bis 6c.3 und Figur 7c verdeutlichen die erste einseitige Betriebsstellung des Stellgliedes 44, in welcher der erste strangseitige Anschluss 58 und der zweite strangseitige Anschluss 62 über eine Querbohrung 84 innerhalb des Stellgliedes 44 miteinander kommunizieren, während die jeweils zweiten Anschlüsse 60, 64 durch das Stellglied 44 verlegt sind. Über eine dritte konkave Mulde 83 kommunizieren der zweite strangseitige Anschluss 62 und der zweite ringleitungsseitige Anschluss 64 miteinander, so dass auch der zweite ringleitungsseitige Anschluss 64 über die Querbohrung 84 mit dem ersten strangseitigen Anschluss 58 kommuniziert.

Die umgekehrte Fallgestaltung ist in den Figuren 6d.1 bis 6d.3 dargestellt, wobei der Strömungsdurchgang durch das Stellglied 44 durch eine das Stellglied 44 durchsetzende Querbohrung 86 bewirkt wird. Die Querbohrungen 84, 86 haben einen kleineren Durchmesser als die Durchgangsbohrungen 80 bzw. 82.

In sämtlichen Figuren 6a.1 bis 6d.3 und Figur 7d sind an der oberen Stirnfläche des Gehäuses 42 und des Stellgliedes 44 Markierungen MG für das Gehäuse 42 und MS für das Stellglied 44 abgetragen. Diese verdeutlichen den Schwenkweg ausgehend von der Betriebsstellung gemäß den Figuren 6a in die jeweils anderen Ventilstellungen gemäß den Figuren 6b, 6c und 6d. Über eine vierte konkave Mulde 85 kommunizieren der erste ringleitungsseitige Anschluss 62 und der zweite ringleitungsseitige Anschluss 64 miteinander, so dass auch der erste ringleitungsseitige Anschluss 62 über die Querbohrung 86 mit dem zweiten strangseitigen Anschluss 60 kommuniziert.

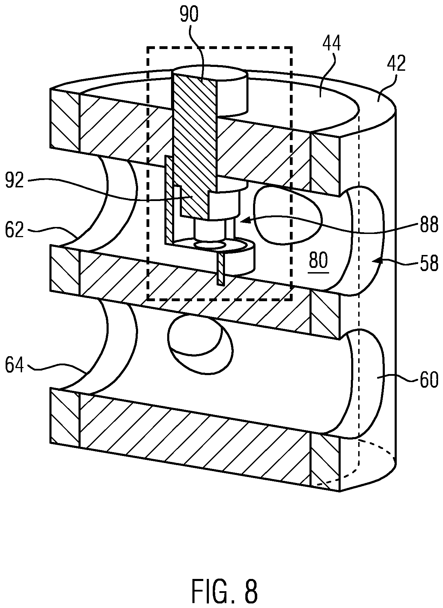

Die Figur 8 zeigt das Ausführungsbeispiel nach den Figuren 6 und 7 in einer Variante. Bei dieser Ausgestaltung ist in dem Strömungsdurchgang 80 ein Dehnstoffelement 88 vorgesehen, das einen Ventilkörper 90 stellt, der mit einem innerhalb der Durchgangsbohrung 80 und dem Stellglied 44 vorgesehenen Ventilsitz 92 zusammenwirkt. Das Dehnstoffelement 88 kann im Bereich der Versorgungsleitung 38 zur Deckung der Wasserentnahme oder in der Zirkulationsleitung 40 eingebaut sein

### Bezugszeichenliste

- 2: Kaltwasserstrang
- 4: Warmwasserstrang
- 6: Warmwasserzirkulationsleitung
- 8: Nasszelle
- 10: Ringleitung
- 12: Verbraucher
- 14: Auslassöffnung
- 16: Einlassöffnung
- 18: Absperrventil (TWC)
- 20: Absperrventil (TWW)
- 22: Übergabestelle
- 24: Steigleitung
- 26: Verbindungsleitung
- 28: Ventil
- 30: Spülventil
- 32: Abgabestelle
- 34: Ringleitungsspülarmatur
- 36: Strömungswiderstandselement
- 38: Warmwasserversorgungsleitung
- 40: Warmwasserzirkulationsleitung
- 42: Gehäuse
- 44: Stellglied
- 46: Schwenkachse
- 48: Ventilkörper
- 50: Betätigungszapfen
- 52: erste konkave Mulde
- 54: zweite konkave Mulde
- 56: Gehäusedeckel
- 58: erster strangseitiger Anschluss
- 60: zweiter strangseitiger Anschluss
- 62: erster ringleitungsseitiger Anschluss
- 64: zweiter ringleitungsseitiger Anschluss
- 66: Strömungsabschnitte
- 68: Strömungsabschnitte
- 70: erster Strömungsweg

- 72: Strömungsabschnitte
- 74: Strömungsabschnitte
- 76: zweiter Strömungsweg
- 78: Bypassweg
- 80: Durchgangsbohrung
- 82: Durchgangsbohrung
- 83: dritte konkave Mulde
- 84: Querbohrung
- 85: vierte konkave Mulde
- 86: Querbohrung
- 88: Dehnstoffelement
- 90: Ventilkörper
- 92: Ventilsitz

## Patentansprüche

1. Trink- und Brauchwassersystem mit einem Übergabepunkt (22) von dem öffentlichen Wasserversorgungsnetz, einem Strang (2, 4), von dem zumindest eine mit zumindest einem Verbraucher (12) versehene Ringleitung (10; 38, 40) abgeht, wobei die Ringleitung (10) über eine Auslassöffnung (14) von dem Strang (2, 4) abgeht und über eine Einlassöffnung (16) in den Strang (2, 4) zurückgeführt ist, wobei der Strang (2, 4) und die Ringleitung (10) parallel geführt sind und in dem Strang (2, 4) zwischen der Auslassöffnung (14) und der Einlassöffnung (16) ein Strömungswiderstandselement (36) angeordnet ist, oder wobei die Ringleitung (38, 40) über die Einlassöffnung (16) in eine Zirkulationsleitung (6) zurückgeführt ist, **dadurch gekennzeichnet, dass** die Auslassöffnung (14) und die Einlassöffnung (16) und die Ringleitung (10) an ein ein Stellglied (44) aufweisendes Absperrventil (18, 20) angeschlossen sind, das zwischen der Auslassöffnung (14) bzw. der Einlassöffnung (16) und der mit dem zumindest einen Verbraucher (12) versehenen Ringleitung (10) angeordnet ist.

2. Trink- und Brauchwassersystem nach Anspruch 1, **dadurch gekennzeichnet, dass** das Absperrventil (18, 20) ein Gehäuse (42), das einen ersten strangseitigen Anschluss (58), der mit der Auslassöffnung (14) kommuniziert, einen zweiten strangseitigen Anschluss (60), der mit der Einlassöffnung (16) kommuniziert, einen ersten ringleitungsseitigen Anschluss (62) und einen zweiten ringleitungsseitigen Anschluss (64) hat, wobei über die ringleitungsseitigen Anschlüsse (62, 64) die Ringleitung (10; 38, 40) an das Gehäuse (42) angeschlossen ist, und das Stellglied (44) in dem Gehäuse (42) so angeordnet und ausgebildet ist, dass
- in einer Betriebsstellung des Stellgliedes (44) in dem Gehäuse (42) ein erster Strömungsweg (70) gebildet ist, der den ersten strangseitigen Anschluss (58) mit dem ersten ringleitungsseitigen Anschluss (62) verbindet und ein zweiter Strömungsweg (76) gebildet ist, der den zweiten strangseitigen Anschluss (60) mit dem zweiten ringleitungsseitigen Anschluss (64) verbindet;
- in einer Bypassstellung des Stellgliedes (44) in dem Gehäuse (42) ein erster Bypassweg (78) gebildet ist, der den ersten strangseitigen Anschluss (58) mit dem zweiten strangseitigen Anschluss (60) verbindet und der erste ringleitungsseitige Anschluss (62) und der zweite ringleitungsseitige Anschluss (64) abgesperrt ist.

3. Trink- und Brauchwassersystem nach Anspruch 2, **dadurch gekennzeichnet, dass** das Stellglied (44) derart in dem Gehäuse (42) angeordnet und ausgebildet ist, dass
- in einer ersten einseitigen Betriebsstellung des Stellgliedes (44) der erste Strömungsweg (70) durchgängig ist und der zweite Strömungsweg (76) abgesperrt ist und
- in einer zweiten einseitigen Betriebsstellung des Stellgliedes (44) der zweite Strömungsweg (76) durchgängig ist und der erste Strömungsweg (70) abgesperrt ist.

4. Trink- und Brauchwassersystem nach einem der Ansprüche 2 bis 3, **dadurch gekennzeichnet, dass** das Stellglied (44) zylinderförmig ausgebildet und verschwenkbar in dem Gehäuse (44) aufgenommen ist und dass die Anschlüsse (58, 60, 62, 64) und/oder Ausformungen des Stellgliedes (44), die abhängig von der Stellung des Stellgliedes (44) verschiedene Durchgänge zwischen den Anschlüssen (58, 60, 62, 64) ausbilden, im Wesentlichen in einer sich quer zu einer Schwenkachse (46) des Stellgliedes (44) erstreckenden Ebene angeordnet sind.

5. Trink- und Brauchwassersystem nach einem der Ansprüche 2 bis 4, **dadurch gekennzeichnet, dass** das Stellglied (44) zylinderförmig ausgebildet und verschwenkbar in dem Gehäuse (42) aufgenommen ist und dass das Stellglied (44) zwei hintereinander in einer sich entlang der Schwenkachse (46) des Stellgliedes (44) erstreckenden Richtung angeordnete Durchgangsbohrungen (80) aufweist, die den ersten Strömungsweg (70) bzw. den zweiten Strömungsweg (76) ausbilden ist und/oder dass der erste strangseitige Anschluss (58) und der zweite strangseitige Anschluss (60) und/oder dass der erste ringleitungsseitige Anschluss (62) und der zweite ringleitungsseitige Anschluss (64) in einer sich entlang der Schwenkachse (46) des Stellgliedes (44) erstreckenden Richtung hintereinander angeordnet sind.

6. Trink- und Brauchwassersystem nach einem der vorherigen Ansprüche, **dadurch gekennzeichnet, dass** das Stellglied (44) ein zumindest einen der Strömungswege (70; 76) zugeordnetes Dehnstoffelement (88) aufweist, durch welches der Strömungsdurchgang durch den entsprechenden Strömungsweg (70, 76) temperaturabhängig gedrosselt werden kann.

7. Trink- und Brauchwassersystem nach einem der vorherigen Ansprüche, **dadurch gekennzeichnet, dass** der erste Strömungsweg (70) mit dem Nenndurchmesser des ersten strangseitigen und des ersten ringleitungsseitigen Anschlusses (58; 62) und der zweite Strömungsweg (76) mit dem Nenndurchmesser des zweiten strangseitigen und des zweiten ringleitungsseitigen Anschlusses (60; 64) ausgebildet ist.

8. Absperrventil für ein Trink- und Brauchwassersystem nach einem der Ansprüche 1 bis 7, mit einem Gehäuse (42), das einen ersten strangseitigen Anschluss (58), der mit der Auslassöffnung (14) kommuniziert, einen zweiten strangseitigen Anschluss (60), der mit der Einlassöffnung (16) kommuniziert, einen ersten ringleitungsseitigen Anschluss (62) und einen zweiten ringleitungsseitigen Anschluss (64) hat, und mit einem Stellglied (44), das so in dem Gehäuse (42) angeordnet und ausgebildet ist, dass
- in einer Betriebsstellung des Stellgliedes (44) in dem Gehäuse (42) ein erster Strömungsweg (70) gebildet ist, der den ersten strangseitige Anschluss (58) mit dem ersten ringleitungsseitigen Anschluss (62) verbindet und ein zweiter Strömungsweg (76) gebildet ist, der den zweiten strangseitigen Anschluss (60) mit dem zweiten ringleitungsseitigen Anschluss (64) verbindet;
- in einer Bypassstellung des Stellgliedes (44) in dem Gehäuse (42) ein erster Bypassweg (78) gebildet ist, der den ersten strangseitige Anschluss (58) mit zweiten strangseitigen Anschluss (60) verbindet und der erste und der zweite zweiten ringleitungsseitige Anschluss (62; 64) abgesperrt sind,
und dass vorzugsweise
- in einer ersten einseitigen Betriebsstellung des Stellgliedes (44) der erste Strömungsweg (70) durchgängig ist und der zweite Strömungsweg (76) abgesperrt ist und
- in einer zweiten einseitigen Betriebsstellung des Stellgliedes (44) der zweite Strömungsweg (76) durchgängig ist und der erste Strömungsweg (70) abgesperrt ist,
und dass weiter vorzugsweise
- in einer Ringleitungs-Bypassstellung des Stellgliedes (44) in dem Gehäuse (42) ein zweiter Bypassweg (78) gebildet ist, der den ersten ringleitungsseitigen Anschluss (62) mit dem zweiten ringleitungsseitigen Anschluss (64) verbindet, und der erste und der zweite strangseitige Anschluss (58; 60) abgesperrt sind.

9. Absperrventil nach Anspruch 8, **dadurch gekennzeichnet, dass** das Stellglied (44) ein zumindest einen der Strömungswege (70; 76) zugeordnetes Dehnstoffelement (88) aufweist, durch welches der Strömungsdurchgang durch den entsprechenden Strömungsweg (70, 76) temperaturabhängig gedrosselt werden kann.

10. Absperrventil nach Anspruch 8 oder 9, **dadurch gekennzeichnet, dass** der erste Strömungsweg (70) mit dem Nenndurchmesser des ersten strangseitigen und des ersten ringleitungsseitigen Anschlusses (58; 62) und der zweite Strömungsweg (76) mit dem Nenndurchmesser des zweiten strangseitigen und des zweiten ringleitungsseitigen Anschlusses (60; 64) ausgebildet ist.
